# EUROPÄISCHE PATENTSCHRIFT

(11) **EP 3 280 903 B1**
(45) Veröffentlichungstag und Bekanntmachung des Hinweises auf die Patenterteilung: **30.10.2019**
(21) Anmeldenummer: 16711256.4
(22) Anmeldetag: 21.03.2016
(51) Int. Cl.: F02M 21/02, F02M 51/06

(54) **GASVENTIL**
GAS VALVE
VALVE À GAZ

(30) Priorität: 08.04.2015 DE 102015206201
(43) Veröffentlichungstag der Anmeldung: 14.02.2018
(73) Patentinhaber: Robert Bosch GmbH, 70442 Stuttgart (DE)
(72) Erfinder: WESSNER, Jochen, 73728 Esslingen (DE); WIEDMANN, Felix, 70469 Stuttgart (DE)
(86) Internationale Anmeldenummer: PCT/EP2016/056111
(87) Internationale Veröffentlichungsnummer: WO 2016/162193

(56) Entgegenhaltungen:
- WO-A1-2016/173778
- DE-T5-112012 003 765
- US-A- 4 390 130
- US-B1- 6 508 418

## Beschreibung

Die Erfindung betrifft ein Gasventil zum Eindosieren eines gasförmigen Brennstoffs in einen Ansaugtrakt einer Verbrennungskraftmaschine mit den Merkmalen des Oberbegriffs des Anspruchs 1. Das Gasventil ist insbesondere elektromagnetisch betätigbar.

Die Applikation des Gasventils erfolgt bevorzugt im Bereich der Fahrzeugtechnik, beispielsweise zur Brennstoffversorgung von Gas- oder Gas-Diesel-Motoren in Personenkraft- oder Nutzfahrzeugen, in Schienenfahrzeugen und/oder auf Schiffen. Darüber hinaus sind jedoch weitere Applikationen möglich. Beispielsweise kann das Gasventil auch zur Gasversorgung von Motoren in Anlagen zur Energiegewinnung und/oder Energieerzeugung eingesetzt werden.

### Stand der Technik

Aus der Offenlegungsschrift DE 43 10 719 A1 sind ein elektromagnetisch betätigbares Brennstoffeinspritzventil und ein Verfahren zu dessen Herstellung bekannt. Das Brennstoffeinspritzventil weist eine Magnetspule auf einem Spulenkörper auf, durch den ein Innenpol geführt ist. Radial außen ist die Magnetspule von einem Ventilmantel umgeben. Der Ventilmantel begrenzt gemeinsam mit dem Innenpol einen ringförmigen Spalt, in den ein nichtmagnetischer Zwischenring eingesetzt ist, um einen magnetischen Kurzschluss zwischen dem Innenpol und dem Ventilmantel zu verhindern. Der Zwischenring ist hierzu aus einem nichtmagnetischen, einen hohen spezifischen elektrischen Widerstand aufweisenden Werkstoff, beispielsweise einem austenitischen Stahl, ausgebildet. Auf diese Weise lässt sich der Einfluss des Zwischenrings auf das magnetische Feld des Brennstoffeinspritzventils sehr gering halten und das Entstehen von zusätzlichen Wirbelstromverlusten verhindern. Der Zwischenring wird durch Löten mit dem Innenpol und dem Ventilmantel dicht verbunden, so dass über den Zwischenring zugleich eine Abdichtung der Magnetspule gegenüber dem einzuspritzenden Brennstoff gewährleistet ist.

Aus der US 4 390 130 A ist darüber hinaus ein elektromagnetisch betätigtes Ventil bekannt, bei dem der zu dosierende Kraftstoff über einen mittigen, den Magnetkern durchsetzenden Kanal eingeleitet wird, wobei der Kanal mit einer Hülse ausgekleidet ist.

Ausgehend von dem vorstehend genannten Stand der Technik liegt der vorliegenden Erfindung die Aufgabe zugrunde, ein Gasventil zum Eindosieren eines gasförmigen Brennstoffs in den Ansaugtrakt einer Verbrennungskraftmaschine anzugeben, das axial an- bzw. durchströmbar ist und darüber hinaus eine sicherer Abdichtung der Magnetspule gegenüber dem einzudosierenden Gas gewährleistet.

Zur Lösung der Aufgabe wird das Gasventil mit den Merkmalen des Anspruchs 1 vorgeschlagen. Vorteilhafte Weiterbildungen der Erfindung sind den Unteransprüchen zu entnehmen.

### Offenbarung der Erfindung

Das zum Eindosieren eines gasförmigen Brennstoffs in einen Ansaugtrakt einer Verbrennungskraftmaschine vorgeschlagene Gasventil umfasst einen Magnetkern und eine Magnetspule zur Einwirkung auf einen Anker, der in einem mit Gas beaufschlagbaren Ankerraum hubbeweglich aufgenommen und in Richtung mindestens eines Ventilsitzes von der Federkraft einer Feder beaufschlagt ist. Im Anker ist eine axial verlaufende Durchströmöffnung für das einzudosierende Gas ausgebildet. Erfindungsgemäß ist im Magnetkern eine weitere axial verlaufende Durchströmöffnung für das einzudosierende Gas ausgebildet, die koaxial zur Durchströmöffnung des Ankers angeordnet ist und in radialer Richtung von einer in den Magnetkern eingesetzten Hülse begrenzt wird.

Weiter ist erfindungsgemäß vorgesehen, dass radial außen an der Hülse, vorzugsweise auf der Höhe eines Axialspalts zwischen dem Magnetkern und dem Anker, ein weiterer Dichtkörper angesetzt und gasdicht mit der Hülse verbunden ist. Der weitere Dichtkörper optimiert die Abdichtung, die sich nunmehr nicht nur in axialer Richtung, sondern ferner in radialer Richtung erstreckt. Insbesondere kann eine gasdichte Trennung des Magnetkerns und/oder der Magnetspule vom Ankerraum bewirkt werden, der im Betrieb des Gasventils von dem gasförmigen Brennstoff beaufschlagt ist.

Die im Anker und im Magnetkern vorgesehenen axial verlaufenden Durchströmöffnungen gewährleisten die axiale An- bzw. Durchströmbarkeit des Gasventils. Im Unterschied zur radialen Anströmung, bei welcher der Gaszustrom über mehrere über den Umfang verteilt angeordnete Radialbohrungen erfolgt, erfolgt der Gaszustrom bei der axialen Anströmung in der Regel über eine zentral angeordnete Axialbohrung. Die axiale Anströmbarkeit vereinfacht demnach den Anschluss des Gasventils an eine Gasversorgungsleitung.

Die in die axial verlaufende Durchströmöffnung des Magnetkerns eingesetzte Hülse dient der Abdichtung des Magnetkerns gegenüber dem in der Durchströmöffnung befindlichen gasförmigen Brennstoff. Sie verhindert, dass der Magnetkern in Kontakt mit dem gasförmigen Brennstoff gelangt. Bevorzugt ist hierzu die Hülse über die gesamte Bauhöhe des Magnetkerns geführt. Besonders bevorzugt überragt die Hülse den Magnetkern zumindest an einer Seite. Ragt die Hülse in die Durchströmöffnung des Ankers hinein, kann über die Hülse zugleich eine Führung des Ankers bewirkt werden.

Des Weiteren bevorzugt ist die Hülse in die Durchströmöffnung des Magnetkerns eingepresst. Der Presssitz verhindert zum Einen, dass gasförmiger Brennstoff zwischen die Hülse und den Magnetkern gelangt, zum Anderen bewirkt er eine Lagefixierung.

Vorteilhafterweise besitzt der weitere Dichtkörper den gleichen Außendurchmesser wie der Magnetkern. Das heißt, dass der Magnetkern über seinen gesamten, dem Ankerraum zugewandten Durchmesser geschützt ist.

Alternativ oder ergänzend wird vorgeschlagen, dass der weitere Dichtkörper gestuft ausgeführt ist. Die gestufte Ausführung ist insbesondere dann von Vorteil, wenn zwischen dem Magnetkern und der Hülse ein Ringraum zur Aufnahme einer Feder ausgebildet ist. In diesem Fall weist auch der Magnetkern eine gestufte Innenkontur auf. Der gestufte Dichtkörper stellt sicher, dass die Abdichtung auch im Bereich der gestuften Innenkontur des Magnetkerns nicht unterbrochen wird.

Bevorzugt ist die in die Durchströmöffnung des Magnetkerns eingesetzte Hülse aus einem korrosionsbeständigen Werkstoff gefertigt. Damit steigt die Robustheit der Hülse. Dies wirkt sich günstig auf die Lebensdauer des Gasventils aus.

Alternativ oder ergänzend wird vorgeschlagen, dass der weitere Dichtkörper als magnetisch nicht leitende Metalldichtung ausgebildet ist. Die Ausbildung des weiteren Dichtkörpers aus einem magnetisch nicht leitenden Werkstoff verhindert, dass es über den Dichtkörper zu einem magnetischen Kurzschluss kommt.

Da der Magnetkern von den gasbeaufschlagten Bereichen gasdicht getrennt ist, kann ein beliebiger Werkstoff zur Ausbildung des Magnetkerns gewählt werden. Bevorzugt ist der Magnetkern aus einem weichmagnetischen Werkstoff, insbesondere aus einem weichmagnetischen Verbundwerkstoff, gefertigt. Durch die Verwendung eines weichmagnetischen Werkstoffs kann der Einfluss von Wirbelströmen reduziert werden. Insbesondere können durch Wirbelströme hervorgerufene Verluste gering gehalten werden. Damit sinkt auch die zum Schalten des Gasventils erforderliche elektrische Leistung. Alternativ oder ergänzend kann die Schaltzeit verkürzt werden. Weichmagnetische Werkstoffe sind in der Regel jedoch besonders empfindlich gegenüber aggressiven und/oder korrosiven Medien, was vorliegend vernachlässigbar ist, da der Magnetkern gegenüber den gasbeaufschlagten Bereichen gasdicht abgedichtet ist.

Gemäß einer bevorzugten Ausführungsform der Erfindung besitzt der Magnetkern eine ringförmige Ausnehmung zur Aufnahme der Magnetspule. Die beidseits der Ausnehmung zu liegen kommenden Bereiche bilden dabei einen Innenpol und einen Außenpol aus. Das heißt, dass der Magnetkern bevorzugt ringförmig ausgebildet ist und einen U-förmigen Querschnitt besitzt. Der U-förmige Querschnitt ermöglicht das Einsetzen der Magnetspule in die ringförmige Ausnehmung des Magnetkerns. Die Öffnung der Ausnehmung ist vorzugsweise dem Ankerraum zugewandt. Der an die Hülse radial außen angesetzte weitere Dichtkörper stellt dabei sicher, dass auch die Magnetspule gegenüber dem Ankerraum gasdicht abgedichtet ist.

In Weiterbildung der Erfindung wird vorgeschlagen, dass der im Ankerraum aufgenommene Anker mindestens einen plattenförmigen Abschnitt zur Ausbildung einer dem Magnetkern zugewandten Polfläche und/oder zur Ausbildung oder Aufnahme eines mit dem Ventilsitz zusammenwirkenden Ventilschließelements besitzt. Der Anker ist demnach bevorzugt als Flachanker ausgebildet. Die Ausgestaltung als Flachanker erleichtert die Ausbildung der axial verlaufenden Durchströmöffnung im Anker. Zugleich kann ein in axialer Richtung besonders kompakt bauendes Gasventil geschaffen werden. Als vorteilhaft erweist sich in diesem Zusammenhang ferner, wenn der Anker zugleich das Ventilschließelement ausbildet oder zumindest aufnimmt. Dabei kann der die Polfläche ausbildende plattenförmige Abschnitt oder ein hierzu axial beabstandeter weiterer plattenförmiger Abschnitt des Ankers das Ventilschließelement ausbilden bzw. aufnehmen.

Um eine besonders kompakt bauende Anordnung zu erhalten, wird ferner vorgeschlagen, dass die eingangs genannte Feder, deren Federkraft den Anker in Richtung des Ventilsitzes beaufschlagt, zumindest abschnittsweise in der axial verlaufenden Durchströmöffnung des Ankers aufgenommen ist. Zur Abstützung der Feder am Anker ist vorzugsweise in der Durchströmöffnung ein radial verlaufender Absatz ausgebildet.

Der Magnetkern, die Magnetspule und der Anker sind vorzugsweise in einem hohlzylinderförmigen Gehäuse angeordnet, in dem ferner ein plattenförmiges Ventilsitzelement zur Ausbildung mindestens eines Ventilsitzes und/oder eine Abstandshülse eingesetzt ist bzw. sind. Durch die Hohlzylinderform des Gehäuses können einzusetzende Bauteile, wie beispielsweise ein plattenförmiges Ventilsitzelement und/oder eine Abstandshülse, mit dem Gehäuse verschraubt oder verpresst werden. Dies erleichtert die Montage und Demontage des Gasventils, um beispielsweise Bauteile auszutauschen. Ferner kann das hohlzylinderförmige Gehäuse in einfacher Weise in eine zylinderförmige Aufnahme eingesetzt werden.

Bevorzugte Ausführungsformen der Erfindung werden nachfolgend anhand der beigefügten Zeichnungen näher erläutert. Diese zeigen:
Fig. 1 einen schematischen Längsschnitt durch ein erfindungsgemäßes Gasventil gemäß einer ersten bevorzugten Ausführungsform,
Fig. 2 einen schematischen Längsschnitt durch ein erfindungsgemäßes Gasventil gemäß einer zweiten bevorzugten Ausführungsform und
Fig. 3 einen schematischen Längsschnitt durch ein erfindungsgemäßes Gasventil gemäß einer dritten bevorzugten Ausführungsform.

### Ausführliche Beschreibung der Zeichnungen

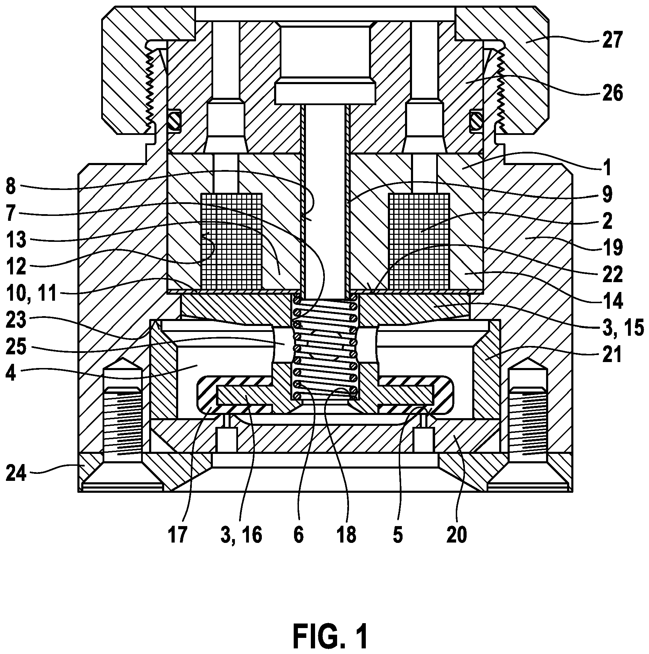

Das in der Fig. 1 dargestellte Gasventil zum Eindosieren eines gasförmigen Brennstoffs umfasst eine elektromagnetische Stelleinheit zur Einwirkung auf einen hubbeweglichen Anker 3, der als Flachanker ausgebildet und in einem Ankerraum 4 aufgenommen ist. Der Ankerraum 4 ist im Betrieb des Gasventils von dem gasförmigen Brennstoff beaufschlagt. Die elektromagnetische Stelleinheit umfasst einen Magnetkern 1 und eine Magnetspule 2, die in einer ringförmigen Ausnehmung 12 des Magnetkerns1 eingesetzt ist. Die ringförmige Ausnehmung 12 ist zum Ankerraum 4 hin offen. Der in Bezug auf die Magnetspule 2 radial außen liegende Teil des Magnetkerns 1 bildet einen Außenpol 14 und der radial innen liegende Teil bildet einen Innenpol 13 aus. Der Anker 3 weist demgegenüber eine Polfläche 22 auf, die durch einen plattenförmigen Abschnitt 15 des Ankers 3 ausgebildet wird.

Um die zum Ankerraum 4 hin offene Ausnehmung 12 des Magnetkerns 1 gasdicht zu schließen und einen Kontakt der Magnetspule 2 und des Magnetkerns 1 mit dem gasförmigen Brennstoff im Ankerraum 4 zu verhindern, ist in einem Axialspalt 10 zwischen dem Magnetkern 1 und dem Anker 3 ein dünner scheibenförmiger Dichtkörper 11 angeordnet. Der Dichtkörper 11 erstreckt sich vom Außendurchmesser des Magnetkerns 1 nach radial innen bis zu einer Hülse 9, die in einer axial verlaufenden Durchströmöffnung 8 des Magnetkerns 1 eingesetzt ist. Um einen magnetischen Kurzschluss zwischen dem Innenpol 13 und dem Außenpol 14 zu verhindern, ist der Dichtkörper 11 aus einem nichtmagnetischen Werkstoff hergestellt.

Die in die Durchströmöffnung 8 eingesetzte Hülse 9 soll ebenfalls den Magnetkern 1 vor dem gasförmigen Brennstoff schützen. Hierzu ist die Hülse in die Durchströmöffnung 8 eingepresst und mit dem Dichtkörper 11 gasdicht verbunden. Ferner ist die Hülse 9 aus einem korrosionsbeständigen Werkstoff hergestellt, um ihre Robustheit zu erhöhen.

Im Anker 3 ist ebenfalls eine axial verlaufende Durchströmöffnung 7 ausgebildet, die koaxial zur Durchströmöffnung 8 des Magnetkerns 1 angeordnet ist. Die beiden Durchströmöffnungen 7, 8 bilden somit einen axial verlaufenden Strömungspfad für das Gas aus. Das heißt, dass das Gas das Gasventil in axialer Richtung durchströmt.

Die Durchströmöffnung 7 des Ankers 3 weist einen geringfügig größeren Innendurchmesser auf als die Durchströmöffnung 8 des Magnetkerns 1. Denn in der Durchströmöffnung 7 des Ankers 3 ist zugleich eine Feder 6 aufgenommen, deren Federkraft den Anker 3 in Richtung eines ringförmigen Ventilsitzes 5 beaufschlagt. Zur Abstützung der Feder 5 am Anker 3 ist innerhalb der Durchströmöffnung 7 ein ringförmiger Absatz 18 ausgebildet.

Der Ventilsitz 5 ist ringförmig gestaltet und in einem plattenförmigen Ventilsitzelement 20 ausgebildet, das in ein hohlzylinderförmiges Gehäuse 19 eingesetzt ist. Über eine Abstandshülse 21 ist das Ventilsitzelement 20 an einem Absatz 23 des Gehäuses 19 abgestützt. Die endgültige Lagefixierung wird über eine Deckscheibe 24 bewirkt, die stirnseitig am Gehäuse 19 anliegt und mit diesem verschraubt ist.

Der Anker 3 weist an seinem dem Ventilsitz 5 zugewandten Ende einen weiteren plattenförmigen Abschnitt 16 auf, der ein mit dem Ventilsitz 5 zusammenwirkendes Ventilschließelement 17 aus einem elastomeren Material trägt.

Die Funktionsweise des Gasventils der Fig. 1 ist wie folgt:
Mit Bestromen der Magnetspule 2 wird ein Magnetfeld aufgebaut, dessen Magnetkraft den Anker 3 - entgegen der Federkraft der Feder 6 - in Richtung des Magnetkerns 1 zieht. Damit öffnet der Ventilsitz 5, da der Anker 3 das mit dem Ventilsitz 5 zusammenwirkende Ventilschließelement 17 trägt. Gasförmiger Brennstoff vermag nunmehr über die Durchströmöffnung 7 und den Ventilsitz 5 aus dem Ankerraum 4 abzuströmen. Um den gasförmigen Brennstoff gleichmäßig im Ankerraum 4 zu verteilen, weist die Durchströmöffnung 7 des Ankers 3 Abzweigbohrungen 25 auf, die radial verlaufen.

Zum Schließen des Gasventils wird die Bestromung der Magnetspule 2 beendet, so dass die Federkraft der Feder 6 den Anker 3 in seine Ausgangslage zurückstellt.

Das Gasventil der Fig. 1 ist wie folgt herstellbar:
Das Gehäuse 19 wird auf einen Werkstückträger mit axialer Abstützung aufgelegt, so dass der Dichtkörper 11 eingelegt werden kann. Nach dem Dichtschweißen werden der Magnetkern 1 mit der Magnetspule 2 und eine Deckscheibe 26 von oben eingesetzt. Anschließend wird die Hülse 9 in die Deckscheibe 26 und/oder den Magnetkern 1 eingepresst. Hierauf folgt die Montage aller notwendigen Gasanschlussteile. Zur Lagefixierung wird ein Deckel 27 auf das Gehäuse 19 aufgeschraubt.

Nach Drehen der Baugruppe wird der Anker 3 mit der Feder 6 in das Gehäuse 19 eingesetzt. Danach folgen die Abstandshülse 21 und das Ventilsitzelement 20. Abschließend wird die Deckscheibe 24 mit dem Gehäuse 19 verschraubt.

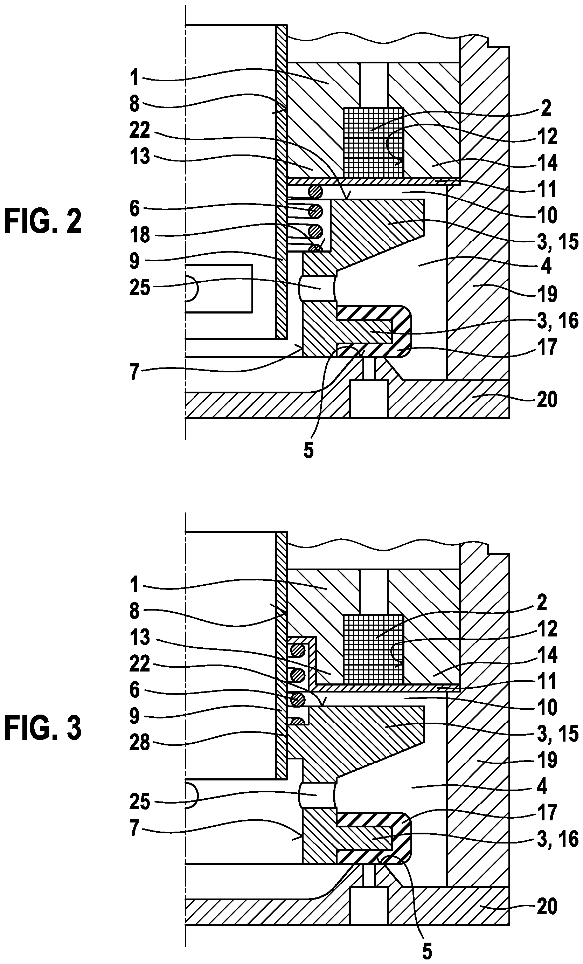

Der Fig. 2 ist eine weitere bevorzugte Ausführungsform eines erfindungsgemäßen Gasventils zu entnehmen. Ein Unterschied zur Ausführungsform der Fig. 1 besteht darin, dass der Absatz 18 innerhalb der Durchströmöffnung 7 zur Abstützung der Feder 6 nach oben verschoben ist und damit oberhalb der Abzweigbohrungen 25 zu liegen kommt. Der Innendurchmesser der Durchströmöffnung 7 unterhalb des Absatzes 18 kann in diesem Fall so dimensioniert werden, dass über die Hülse 9 zugleich eine Ankerführung bewirkt wird.

Eine Abwandlung der Ausführungsform der Fig. 2 ist in der Fig. 3 dargestellt. Hier wird die Führung des Ankers 3 über die Hülse 9 lediglich im Bereich eines Führungsabschnitts 28 bewirkt. Der Führungsabschnitt 28 wird durch einen Abschnitt der Durchströmöffnung 7 mit verringertem Innendurchmesser gebildet. Zur Abstützung der Feder 6 am Magnetkern 1, ist die Durchströmöffnung 8 gestuft ausgeführt. Um eine unterbrechungsfreie Abdichtung des Magnetkerns 1 gegenüber den gasbeaufschlagten Bereichen zu gewährleisten, ist der Dichtkörper 11 ebenfalls gestuft ausgeführt.

## Patentansprüche

1. Gasventil zum Eindosieren eines gasförmigen Brennstoffs in einen Ansaugtrakt einer Verbrennungskraftmaschine, umfassend einen Magnetkern (1) und
eine Magnetspule (2) zur Einwirkung auf einen Anker (3), der in einem mit Gas beaufschlagbaren Ankerraum (4) hubbeweglich aufgenommen und in Richtung mindestens eines Ventilsitzes (5) von der Federkraft einer Feder (6) beaufschlagt ist, wobei im Anker (3) eine axial verlaufende Durchströmöffnung (7) für das einzudosierende Gas ausgebildet ist, wobei im Magnetkern (2) eine weitere axial verlaufende Durchströmöffnung (8) für das einzudosierende Gas ausgebildet ist,
die koaxial zur Durchströmöffnung (7) des Ankers (3) angeordnet ist und in radialer Richtung von einer in den Magnetkern (2) eingesetzten Hülse (9) begrenzt wird,
**dadurch gekennzeichnet, dass** radial außen an der Hülse (9), vorzugsweise auf der Höhe eines Axialspalts (10) zwischen dem Magnetkern (1) und dem Anker (3), ein weiterer Dichtkörper (11) angesetzt und gasdicht mit der Hülse (9) verbunden ist, zur Abdichtung des Magnetkerns (1) gegenüber dem in der weiteren axial verlaufenden Durchströmöffnung (8) befindlichen gasförmigen Brennstoff.

2. Gasventil nach Anspruch 1,
**dadurch gekennzeichnet, dass** der weitere Dichtkörper (11) den gleichen Au-βendurchmesser wie der Magnetkern (1) besitzt und/oder gestuft ausgeführt ist.

3. Gasventil nach Anspruch 1 oder 2,
**dadurch gekennzeichnet, dass** die Hülse (9) aus einem korrosionsbeständigen Werkstoff gefertigt ist und/oder der weitere Dichtkörper (11) als magnetisch nicht leitende Metalldichtung ausgebildet ist.

4. Gasventil nach einem der vorhergehenden Ansprüche,
**dadurch gekennzeichnet, dass** der Magnetkern (1) aus einem weichmagnetischen Werkstoff, insbesondere aus einem weichmagnetischen Verbundwerkstoff, gefertigt ist.

5. Gasventil nach einem der vorhergehenden Ansprüche,
**dadurch gekennzeichnet, dass** der Magnetkern (1) eine ringförmige Ausnehmung (12) zur Aufnahme der Magnetspule (2) besitzt und die beidseits der Ausnehmung (12) zu liegen kommenden Bereiche einen Innenpol (13) und einen Außenpol (14) ausbilden.

6. Gasventil nach einem der vorhergehenden Ansprüche,
**dadurch gekennzeichnet, dass** der Anker (3) mindestens einen plattenförmigen Abschnitt (15, 16) zur Ausbildung einer dem Magnetkern (1) zugewandten Polfläche (22) und/oder zur Ausbildung oder Aufnahme eines mit dem Ventilsitz (5) zusammenwirkenden Ventilschließelements (17) besitzt.

7. Gasventil nach einem der vorhergehenden Ansprüche,
**dadurch gekennzeichnet, dass** die Feder (6) zumindest abschnittsweise in der axial verlaufenden Durchströmöffnung (7) des Ankers (3) aufgenommen ist, wobei vorzugsweise in der Durchströmöffnung (7) ein sich nach radial innen erstreckender Absatz (18) zur Abstützung der Feder (6) ausgebildet ist.

8. Gasventil nach einem der vorhergehenden Ansprüche,
**dadurch gekennzeichnet, dass** der Magnetkern (1), die Magnetspule (2) und der Anker (3) in einem hohlzylinderförmigen Gehäuse (19) angeordnet sind, in dem ferner ein plattenförmiges Ventilsitzelement (20) zur Ausbildung mindestens eines Ventilsitzes (16) und/oder eine Abstandshülse (21) eingesetzt ist bzw. sind.

## Claims

1. Gas valve for dosing a gaseous fuel into an intake tract of an internal combustion engine, comprising a magnet core (1) and a magnet coil (2) for acting on an armature (3) which is received, such that it can perform stroke movements, in an armature space (4) is able to be charged with gas and which is acted on by the spring force of a spring (6) in the direction of at least one valve seat (5), wherein an axially extending throughflow opening (7) for the gas to be dosed in is formed in the armature (3), wherein a further axially extending throughflow opening (8) for the gas to be dosed in is formed in the magnet core (2) and is arranged coaxially with respect to the throughflow opening (7) of the armature (3) and is delimited in the radial direction by a sleeve (9) which is inserted into the magnet core (2),
**characterized in that**, radially at the outside on the sleeve (9), preferably at the height of an axial gap (10) between the magnet core (1) and the armature (3), a further sealing body (11) is attached and connected in a gas-tight manner to the sleeve (9) for the purpose of sealing the magnet core (1) with respect to the gaseous fuel present in the further axially extending throughflow opening (8).

2. Gas valve according to Claim 1,
**characterized in that** the further sealing body (11) has the same outer diameter as the magnet core (1) and/or is of stepped form.

3. Gas valve according to Claim 1 or 2,
**characterized in that** the sleeve (9) is produced from a corrosion-resistant material and/or the further sealing body (11) is in the form of a magnetically non-conductive metal seal.

4. Gas valve according to one of the preceding claims,
**characterized in that** the magnet core (1) is produced from a magnetically soft material, in particular from a magnetically soft composite material.

5. Gas valve according to one of the preceding claims,
**characterized in that** the magnet core (1) has an annular recess (12) for accommodating the magnet coil (2), and the regions coming to be situated on both sides of the recess (12) form an inner pole (13) and an outer pole (14) .

6. Gas valve according to one of the preceding claims,
**characterized in that** the armature (3) has at least one plate-like section (15, 16) for forming a pole surface (22) which faces the magnet core (1) and/or for forming or receiving a valve closure element (17) which interacts with the valve seat (5).

7. Gas valve according to one of the preceding claims,
**characterized in that** the spring (6) is received at least sectionwise in the axially extending throughflow opening (7) of the armature (3), wherein a radially inwardly extending shoulder (18) for supporting the spring (6) is preferably formed in the throughflow opening (7).

8. Gas valve according to one of the preceding claims,
**characterized in that** the magnet core (1), the magnet coil (2) and the armature (3) are arranged in a hollow-cylindrical housing (19) in which, furthermore, a plate-like valve seat element (20), for forming at least one valve seat (16), and/or a spacer sleeve (21) is/are inserted.

## Revendications

1. Soupape à gaz servant à doser un carburant gazeux dans une voie d'admission d'un moteur à combustion interne et comprenant un noyau magnétique (1) et une bobine magnétique (2) destinée à agir sur un induit (3) qui est reçu de manière mobile suivant une course dans un espace d'induit (4), pouvant être soumis à un gaz, et qui est sollicité dans la direction d'au moins un siège de soupape (5) par la force d'un ressort (6), une ouverture d'écoulement (7) qui s'étend axialement et qui est destinée au gaz à doser étant ménagée dans l'induit (3), une autre ouverture d'écoulement (8) qui s'étend axialement et qui est destinée au gaz à doser étant ménagée dans le noyau magnétique (2) et étant disposée coaxialement à l'ouverture d'écoulement (7) de l'induit (3) et étant limitée dans une direction radiale par un manchon (9) inséré dans le noyau magnétique (2),
**caractérisée en ce qu'**un autre corps d'étanchéité (11) est fixé radialement à l'extérieur au manchon (9), de préférence à la hauteur d'un espace axial (10) ménagé entre le noyau magnétique (1) et l'induit (3), et est relié de manière étanche aux gaz au manchon (9) pour réaliser l'étanchéité du noyau magnétique (1) par rapport au carburant gazeux se trouvant dans l'autre ouverture d'écoulement (8) s'étendant axialement.

2. Soupape à gaz selon la revendication 1,
**caractérisée en ce que** le corps d'étanchéité supplémentaire (11) a le même diamètre extérieur que le noyau magnétique (1) et/ou est conçu en gradins.

3. Soupape à gaz selon la revendication 1 ou 2,
**caractérisée en ce que** le manchon (9) est fabriqué à partir d'un matériau résistant à la corrosion et/ou **en ce que** le corps d'étanchéité supplémentaire (11) est conçu sous la forme d'une garniture d'étanchéité métallique magnétiquement non conductrice.

4. Soupape à gaz selon l'une des revendications précédentes,
**caractérisée en ce que** le noyau magnétique (1) est fabriqué à partir d'un matériau magnétique doux, en particulier d'un matériau composite magnétique doux.

5. Soupape à gaz selon l'une des revendications précédentes,
**caractérisée en ce que** le noyau magnétique (1) comporte un évidement annulaire (12) destiné à recevoir la bobine magnétique (2) et les régions situées des deux côtés de l'évidement (12) forment un pôle interne (13) et un pôle externe (14).

6. Soupape à gaz selon l'une des revendications précédentes,
**caractérisée en ce que** l'induit (3) comporte au moins une partie (15, 16) en forme de plaque destinée à former une face polaire (22) dirigée vers le noyau magnétique (1) et/ou destinée à former ou recevoir un élément de fermeture de soupape (17) coopérant avec le siège de soupape (5).

7. Soupape à gaz selon l'une des revendications précédentes,
**caractérisée en ce que** le ressort (6) est reçu au moins par endroits dans l'ouverture d'écoulement (7), s'étendant axialement, de l'induit (3), de préférence un épaulement (18) qui s'étend radialement vers l'intérieur et qui est destiné à supporter le ressort (6) étant formé dans l'ouverture d'écoulement (7).

8. Soupape à gaz selon l'une des revendications précédentes, **caractérisée en ce que** le noyau magnétique (1), la bobine magnétique (2) et l'induit (3) sont disposés dans un boîtier cylindrique creux (19) dans lequel sont insérés en outre un élément de siège de soupape (20) en forme de plaque, destiné à former au moins un siège de soupape (16) et/ou un manchon d'espacement (21).
